# EUROPÄISCHE PATENTSCHRIFT

(11) **EP 0 800 739 B1**
(45) Veröffentlichungstag und Bekanntmachung des Hinweises auf die Patenterteilung: **17.03.1999**
(21) Anmeldenummer: 95940164.7
(22) Anmeldetag: 11.12.1995
(51) Int. Cl.: H04M 9/08

(54) **FREISPRECHEINRICHTUNG FÜR EIN DIGITALES KOMMUNIKATIONSENDGERÄT**
HANDS-FREE DEVICE FOR A DIGITAL COMMUNICATIONS TERMINAL
DISPOSITIF MAINS LIBRES POUR UN POSTE TERMINAL NUMERIQUE DE COMMUNICATIONS

(30) Priorität: 29.12.1994 DE 4447028
(43) Veröffentlichungstag der Anmeldung: 15.10.1997
(73) Patentinhaber: SIEMENS AKTIENGESELLSCHAFT, 80333 München (DE)
(72) Erfinder: NIJMOLEN, Willem, NL-7102 Winterswijk (NL)
(86) Internationale Anmeldenummer: DE9501771
(87) Internationale Veröffentlichungsnummer: WO9621312

(56) Entgegenhaltungen:
- EP-A- 0 376 589
- WO-A-87/01255
- US-A- 5 297 198
- SIEMENS COMPONENTS, Bd. 26, Nr. 1, Februar 1991 BERLIN, Seiten 12-16, XP 000219204 M. FOLLNER ET AL. 'Telephoning with ease: Handsfree' in der Anmeldung erwähnt
- PATENT ABSTRACTS OF JAPAN vol. 11 no. 7 (E-469) ,9.Januar 1987 & JP,A,61 184029 (NEC CORP.)

## Beschreibung

Die Erfindung betrifft eine Freisprecheinrichtung gemäß dem Oberbegriff des Patentanspruchs 1 sowie ein Verfahren gemäß dem Oberbegriff des Patentanspruchs 2.

Eine solche Freisprecheinrichtung ist beispielsweise aus der US-A-5297198 oder aus dem "Preliminary Data Sheet, 02.94 für den Baustein PSB 2163 Audio Ringing Codec Filter, Featuring Speakerphone Function, (ARCOFI-SP)" bekannt.

Ein grundsätzliches Verfahren zur Einstellung von Freisprecheinrichtungen ist aus der Zeitschrift "Siemens Components 29 (1991) Heft 1, Seite 12, Aufsatz von Michael Follner und Michel Forro, Komfortabel telefonieren: Freisprechen" bekannt. Hierbei wird eine Freisprecheinrichtung für ein analoges Telefon beschrieben. Das grundsätzliche Regelungsprinzip beim Freisprechen findet auch bei digitalen Kommunikationsendgeräten Anwendung.

Unter Freisprechen versteht man die Möglichkeit des Telefonieren ohne den Telefonhörer zu benutzen. Der freisprechende Telefonteilnehmer braucht keinen Hörer mehr zu halten und kann sich frei im Raum bewegen. Bei einem Kommunikationsendgerät mit Freisprecheinrichtung sind der Lautsprecher und das Mikrofon im Gehäuse des Kommunikationsendgerätes eingebaut. Hierdurch wird eine Regelung der Verstärkung des Sendekanals für das Mikrofon und des Empfangs kanals für den Lautsprecher nötig. Würden Sende- und Empfangskanal, wie im normalen Hörbetrieb eines Telefons üblich, mit einer festen Verstärkung arbeiten, käme es unweigerlich zur Rückkopplungseffekten. Um dies zu verhindern ist in jedem Kanal eine Dämpfungsstufe vorgesehen, über die im Sendebetrieb bzw. Sendemodus der Empfangskanal und im Empfangsbetrieb bzw. Empfangsmodus der Sendekanal gedämpft werden. Über einen Sprachsignalkomparator wird erkannt, in welchem Kanal ein Sprachsignal vorliegt, und daraufhin der andere Kanal entsprechend gedämpft. Der sogenannte Hub um den im Sende- bzw. Empfangskanal gedämpft wird richtet sich hauptsächlich nach den akustischen oder elektrischen Randbedingungen die beim jeweiligen Kommunikationsendgerät zum tragen kommen. Erfahrungsgemäß liegt der Hub zwischen 25 und 40 dB.

Bei Freisprecheinrichtungen mit einer solchen Hubsteuerung ist das Gegensprechverhalten von Empfangen auf Senden stark abhängig von der Empfindlichkeit des Mikrofonsignals am Sprachsignalkomparator, welcher die Sprachrichtung Senden bzw. Empfangen bestimmt. Das beste Gegensprechverhalten wird dann erreicht, wenn das Empfangssignal am Sprachsignalkomparator im Empfangszustand mit nur minimaler Sicherheit ausreicht um die Freisprecheinrichtung in diesem Zustand zu halten. In der Praxis ist diese Sicherheit zur empfangsseitigen Selbstunterbrechung, d.h. zur Umschaltung vom Empfangszustand in den Sendezustand weitaus größer, da mit relativ großen Streuungen des vom Mikrofon abgegebenen Sprachsignals gerechnet werden muß. Gründe für diese Streuung sind beispielsweise Streuungen der Empfindlichkeit und des Frequenzgangs von Mikrofon und Lautsprecher, Streuungen verursacht durch den Einbau der Wandler, Streuungen der Gehäusekopplungen wie Resonanzen und Undichtigkeiten, Toleranzen des Sprachsignalkomparators und Reflexionen in direkter Nähe von Mikrofon und Lautsprecher.

Diese Streuungen können nur mit erheblichem Aufwand in der Beschaffung, Fertigung und Prüfung minimiert werden, indem engere Toleranzen, ein aufwendigerer Einbau und/oder ein kostenintensiver Abgleich vorgesehen werden.

Der Erfindung liegt die Aufgabe zugrunde, eine Freisprecheinrichtung bzw. ein Verfahren der eingangs genannten Art anzugeben, durch die bzw. durch das eine optimale Einstellung des Schwellwertes für die empfangsseitige Selbstunterbrechung der Freisprecheinrichtung am jeweiligen Aufstellort des Kommunikationsendgerätes auf einfache Art und Weise möglich ist.

Diese Aufgabe wird für eine Freisprecheinrichtuung durch die im Patentanspruch 1 und für ein Verfahren durch die im Patentanspruch 2 eingegebenen Merkmale gelost.

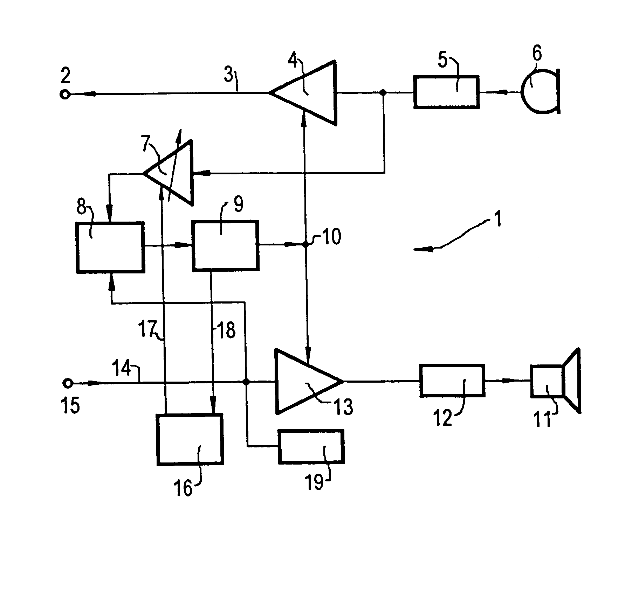

Im folgenden wird die Erfindung anhand eines in der Zeichnung dargestellten Ausführungsbeispieles beschrieben.

In der einzigen Figur sind die für das Verständnis der Erfindung notwendigen Baustufen einer Freisprecheinrichtung 1 in einem digitalen Konmunikationsendgerät dargestellt.

Die Freisprecheinrichtung 1 weist einen Sendekanal oder Sendesignalzweig 3 und einen Empfangskanal oder Empfangssignalzweig 14 auf. Im Sendesignalzweig 3 wird das von einem Mikrofon 6 abgegebene Sprachsignal über eine Sendesignalbearbeitungsstufe 5 und eine nachgeschaltete Sendedämpfungsstufe 4 an eine Ausgangsklemme 2 gegeben. Im Empfangssignalzweig 14 wird das an einer Eingangsklemme 15 anliegende Sprachsignal über eine Empfangsdämpfungsstufe 13 und eine nachgeschaltete Empfangssignalbearbeitungsstufe 12 an einen Lautsprecher 11 gegeben.

In den Bearbeitungsstufen 5, 12 findet die Analog-Digital-bzw. Digital-Analog-Wandlung des Sprachsignals vom Mikrofon bzw. zum Lautsprecher 11 statt. Die Ausgangsklemme 2 bzw. die Eingangsklemme 15 sind beispielsweise an einem logischen Baustein zur Sprachsignalkompression bzw. -Expansion angeschaltet.

Zur eingangs erläuterten Hubsteuerung ist ein Sprachsignalkomparator 8 vorgesehen, der eingangsseitig mit dem Empfangs-und dem Sendesignalzweig 14, 3 verbunden ist. Empfangssignalseitig ist der Sprachsignalkomparator 8 beispielsweise direkt mit der Eingangsklemme 15 verbunden. Sendesignalseitig ist der Sprachsignalkomparator 8 über einen Verstärker 7 mit regelbarem Verstärkungsfaktor beispielsweise mit einem Punkt zwischen der Sendedämpfungsstufe 4 und der Sendesignalbearbeitungsstufe 5 verbunden.

Anstelle des einzigen in der Figur dargestellten Sprachsignalkomparators 8 können auch zwei solche Bausteine vorgesehen sein. Ebenso kann die Anschaltung im Sendesignal- bzw. im Empfangssignalzweig anders gewählt sein.

Ausgangsseitig ist dem Sprachsignalkomparator 8 eine Dämpfungssteuerung 9 nachgeschaltet. Diese Dampfungssteuerung 9 steuert über eine Steuerleitung 10 die Sendedämpfungsstufe 4 und die Engfangsdämpfungsstufe 13 an. Weiter ist die Dämpfungssteuerung 9 über eine Statusleituung 18 mit einer Steuereinrichtung 16 des Kommmikationsendgerätes verbunden, die wiederum über eine Steuerleitung 17 mit dem regelbaren Verstärker 7 verbunden ist.

Erfindungswesentlich ist der Verstärker 7 mit regelbarem Verstärkungsfaktor, durch den der sendesignalseitige Eingang des Sprachsignalkomparators 8 in seiner Empfindlichkeit geregelt werden kann. Erfindungswesentlich ist weiter ein digitaler Tongenerator 19, der direkt mit der Eingangsklemme 15 bzw. mit der Eingangsseite der Empfangsdämpfungsstufe 13 verbunden ist. Der Tongenerator 19, der durch den im Kommunikationsendgerät befindlichen DTMF-Generator für die Mehrfachfrequenzwahl realisiert sein kann, gibt ein Pseudo-Empfangssignal auf den Empfangssignalzweig 14.

Zur Durchführung des erfindungsgemäßen Verfahrens ist die Steuereinrichtuung notwendig, die den Verstärkungsfaktor des Verstärkers 7 und damit die sendesignalseitige Empfindlichkeit des Sprachsignalkomparators 8 regelt. Weiter wird von der Dämpfungssteuerung 9 ein Steuersignal an die Steuereinrichtung 16 gegeben, wenn die Freisprecheinrichtung 1 vom Empfangszustand in den Sendezustand geschaltet wird.

Das Kommunikationsendgerät wird mit der üblichen Sicherheit zur empfangsseitigen Selbstunterbrechung, d.h. zur Umschaltung vom Empfangs- in den Sendezustand hergestellt. Am Aufstellort kann jetzt bei Bedarf vom Kunden eine Optimierung durchgeführt werden. Hierzu wird vom Tongenerator 19 ein Pseudo-Empfangssignal auf den Empfangssignalzweig 14 gegeben. Ausgehend vom Empfangs zustand in dem sich die Freisprecheinrichtung 1 befindet wird der Verstärkungsfaktor am Verstärker 7, und damit die sendesignalseitige Empfindlichkeit des Sprachsignalkomparators 8 solange erhöht, bis bei einem Schwellwert vom Sprachsignalkomparator 8 über die Dämpfungssteuerung 9 in den Sendezustand umgeschaltet wird. Dieser Umschaltbefehl gelangt von der Dämpfungssteuerung 9 über die Statusleitung 18 auch an die Steuereinrichtung 16.

Bei einer Ausgestaltung der Erfindung wird der Verstärkungsfaktor am Verstärker 7 stufenweise erhöht, und bei jeder Stufe des Verstärkungsfaktors, d.h. bei jeder Empfindlichkeitsstufe am sendesignalseitigen Eingang des Sprachsignalkomparators 8 wird vom Tongenerator 19 die Freisprecheinrichtung 1 durchgewobbelt. Der Schwellwert, bei dem wiederum eine Umschaltung vom Empfangs- in den Sendezustand erfolgt, wird um einen vorgegebenen Wert reduziert und abgespeichert. Die Empfindlichkeit des Sprachsignalkomparators 8 für die empfangsseitige Selbstunterbrechung ist somit optimal eingestellt.

## Patentansprüche

1. Freisprecheinrichtung (1) für ein digitales Kommunikationsendgerät,
mit einem Sendesignal- und einem Empfangssignalzweig (3, 14), wobei in beiden Signalzweigen (3, 14) einstellbare Dämpfungsstufen (4, 13) vorgesehen sind, die von einer Dämpfungssteuerung (9) angesteuert werden, und
mit mindestens einem Sprachsignalkomparator (8), der eingangsseitig mit den beiden Signalzweigen (3, 14) und ausgangsseitig mit der Dämpfungssteuerung (9) verbunden ist, und mit einem mit dem Empfangssignalzweig (14) verbundenen Tongenerator (19)
**dadurch gekennzeichnet,**
daß dem Sprachsignalkomparator (8) in Richtung zum Sendesignalzweig (3) ein Verstärker (7) mit regelbarem Verstärkungsfaktor zur Einstellung der Empfindlichkeit am sendeseitigen Anschluß des Sprachsignalkomparators (8)vorgeschaltet ist, und,
daß Mittel zur Erhöhung der Empfindlichkeit bis zur Umschaltung vom Sende zustand zum Empfangs zustand vorgesehen sind.

2. Verfahren zur automatischen Einstellung der Empfindlichkeit eines Anschlusses eines Sprachsignalkomparators (8) zur Umschaltung von einem Empfangs zustand in einen Sende zustand bei einer Freisprecheinrichtung (1) mit einem Sendesignal- und einem Empfangssignalzweig (3, 14) in einem digitalen Kommunikationsendgerät,
wobei die Umschaltung von dem zwischen den Sendesignalzweig (3) und den Empfangssignalzweig (14) geschalteten Sprachsignalkomparator (8) bewirkt wird, und
wobei von einem Tongenerator (19) ein Pseudo-Empfangssignal auf den Empfangssignalzweig (14) gegeben wird,
**dadurch gekennzeichnet,**
daß die Empfindlichkeit am sendeseitigen Anschluß des Sprachsignalkomparators (8) so lange erhöht wird, bis die Umschaltung erfolgt.

3. Verfahren nach Anspruch 2,
**dadurch gekennzeichnet,**
daß die Empfindlichkeit des Sprachsignalkomparators (8) stufenweise erhöht wird, und
daß der Tongenerator (19) bei jeder Empfindlichkeitsstufe die Freisprecheinrichtung (1) durchwobbelt.

4. Verfahren nach Anspruch 2 oder 3
**dadurch gekennzeichnet,**
daß der Empfindlichkeitswert bei der Umschaltung um einen vorgegebenen Wert reduziert und zur optimalen Einstellung der Freisprecheinrichtung (1) abgespeichert wird.

## Claims

1. Hands-free telephone (1) for a digital communications terminal, having a transmitted signal path (3) and a received signal path (14), adjustable attenuation stages (4, 13) being provided in both signal paths (3, 14), which attenuation stages (4, 13) are driven by an attenuation controller (9), and having at least one speech signal comparator (8) which is connected on the input side to the two signal paths (3, 14) and on the output side to the attenuation controller (9), and having a tone generator (19) which is connected to the received signal path (14), characterized in that an amplifier (7) having variable gain is connected upstream of the speech signal comparator (8) in the direction towards the transmitted signal path (3), for the purpose of setting the sensitivity at the connection of the speech signal comparator (8) on the transmitting side, and in that means are provided for increasing the sensitivity until the changeover takes place from the transmitting state to the receiving state.

2. Method for automatically setting the sensitivity of a connection of a speech signal comparator (8) for changing over from a receiving state to a transmitting state in the case of a hands-free telephone (1) having a transmitted signal path (3) and a received signal path (14) in a digital communications terminal, the changeover being produced by the speech signal comparator (8) which is connected between the transmitted signal path (3) and the received signal path (14), and a pseudo-received signal being passed to the received signal path (14) by a tone generator (19), characterized in that the sensitivity at the connection of the speech signal comparator (8) on the transmitting side is increased until the changeover takes place.

3. Method according to Claim 2, characterized in that the sensitivity of the speech signal comparator (8) is increased in steps, and in that the tone generator (19) sweeps through the frequency range of the hands-free telephone (1) for each sensitivity step.

4. Method according to Claim 2 or 3, characterized in that the sensitivity level for the changeover is reduced by a predetermined value and is stored for the optimum setting of the hands-free telephone (1).

## Revendications

1. Dispositif mains libres (1) pour un terminal de communication numérique,
comportant :
une branche de signal d'émission (3) et une branche de signal de réception (14), des étages d'atténuation (4, 13) commandés par une commande d'atténuation (9) étant prévus dans les deux branches de signal (3, 14),
au moins un comparateur de signal vocal (8), qui est relié en entrée aux deux branches de signal (3, 14) et en sortie à la commande d'atténuation (9), et
un générateur de fréquences vocales (19) relié à la branche de signal de réception (14),
caractérisé par le fait que
un amplificateur (7) ayant un facteur d'amplification réglable pour régler la sensibilité à la borne côté émission du comparateur de signal vocal (8) est branché du côté amont du comparateur de signal vocal (8) dans la direction de la branche de signal d'émission (3) et
qu'il est prévu des moyens pour augmenter la sensibilité jusqu'à la commutation de l'état d'émission à l'état de réception.

2. Procédé pour le réglage automatique de la sensibilité d'une borne d'un comparateur de signal vocal (8) en vue de la commutation d'un état de réception à un état d'émission dans un dispositif mains libres (1) comportant une branche de signal d'émission (3) et une branche de signal de réception (14) dans un terminal de communication numérique,
dans lequel
la commutation est provoquée par le comparateur de signal vocal (8) branché entre la branche de signal d'émission (3) et la branche de signal de réception (14) et
un générateur de fréquences vocales (19) donne un pseudosignal de réception sur la branche de signal de réception (14),
caractérisé par le fait que
on augmente la sensibilité à la borne côté émission du comparateur de signal vocal (8) jusqu'à ce que la commutation s'effectue.

3. Procédé selon la revendication 2,
caractérisé par le fait que
on augmente graduellement la sensibilité du comparateur de signal vocal (8), et
que le générateur de fréquences vocales (19) vobule complètement le dispositif mains libres (1) à chaque degré de sensibilité.

4. Procédé selon la revendication 2 ou 3,
caractérisé par le fait que
on diminue d'une valeur prédéterminée la valeur de sensibilité lors de la commutation et qu'on la mémorise pour le réglage optimal du dispositif mains libres (1).
